# FASCICULE DE BREVET EUROPEEN

(11) **EP 2 516 265 B1**
(45) Date de publication et mention de la délivrance du brevet: **02.07.2014**
(21) Numéro de dépôt: 10807337.0
(22) Date de dépôt: 15.12.2010
(51) Int. Cl.: B64C 25/40, H02J 4/00

(54) **AERONEF COMPORTANT UN DEMARREUR-GENERATEUR ELECTRIQUE POUR LE OU CHAQUE TURBOREACTEUR ET UN TRAIN D'ATTERRISSAGE EQUIPE D'UN MOTEUR ELECTRIQUE DE MANOEUVRE AU SOL**
FLUGZEUG MIT ELEKTRISCHEM STARTER/GENERATOR FÜR DAS ODER JEDES TURBOJETTRIEBWERK UND MIT EINEM ELEKTROMOTOR AUSGESTATTETES FAHRWERK ZUR BEWEGUNG AUF DEM BODEN
AIRCRAFT COMPRISING AN ELECTRIC STARTER/GENERATOR FOR THE OR EACH TURBOJET ENGINE AND LANDING GEAR FITTED WITH AN ELECTRIC MOTOR FOR MOVING ON THE GROUND

(30) Priorité: 23.12.2009 FR 0959540
(43) Date de publication de la demande: 31.10.2012
(73) Titulaire: Hispano Suiza, 92700 Colombes (FR)
(72) Inventeur: BERENGER, Serge, F-94550 Chevilly Larue (FR); GODART, Didier, François, Marie, F-78670 Villennes Sur Seine (FR)
(74) Mandataire: Intès, Didier Gérard André
(86) Numéro de dépôt international: PCT/FR2010/052734
(87) Numéro de publication internationale: WO 2011/086258

(56) Documents cités:
- WO-A1-2008/108933
- US-A1- 2006 065 779
- US-A1- 2008 258 014

## Description

L'invention se rapporte à un aéronef comportant un ou plusieurs turboréacteurs équipés chacun d'un démarreur-générateur électrique et un train d'atterrissage équipé d'un moteur électrique de manoeuvre au sol, entre le point d'embarquement et la piste de décollage. Elle concerne plus particulièrement un perfectionnement permettant de mutualiser certains sous-ensembles pour fournir l'énergie nécessaire au démarrage du ou des turboréacteurs et aux manoeuvres au sol de l'aéronef.

Dans les avions modernes, on cherche de plus en plus à remplacer les systèmes auxiliaires hydrauliques ou pneumatiques par des équipements électriques. On connaît ainsi un système de démarrage du ou chaque turboréacteur par un démarreur-générateur électrique, c'est-à-dire un sous-ensemble réversible formant moteur électrique de démarrage s'il est alimenté en énergie électrique ou générateur électrique s'il est entraîné en rotation par ledit turboréacteur après le démarrage de ce dernier. Un tel sous-ensemble démarreur-générateur est associé à chaque turboréacteur. Par ailleurs, on connaît un train d'atterrissage équipé d'un moteur électrique de manoeuvre au sol. Ce moteur électrique permet de déplacer l'avion au sol pendant les manoeuvres entre le poste d'embarquement et la piste d'envol. Il est souvent intégré au moyeu d'une roue du train d'atterrissage. US 2008/0258014 divulgue de tels éléments.

L'invention vise une rationalisation de ces équipements électromécaniques. Elle résulte de la constatation que les caractéristiques des équipements électriques nécessaires au démarrage d'un turboréacteur et les caractéristiques des équipements électriques d'entraînement des trains d'atterrissage sont très semblables et que ceux-ci peuvent donc être combinés.

Plus particulièrement, l'invention concerne un aéronef selon la revendication 1. Un tel aéronef comporte un premier turboréacteur équipé d'un premier démarreur-générateur électrique et un train d'atterrissage équipé d'un moteur électrique de manoeuvre au sol. Il comporte également un convertisseur électrique apte à être couplé audit démarreur-générateur ou audit moteur électrique de manoeuvre via une unité de distribution de courant, configurable.

Avantageusement, l'aéronef comporte une unité auxiliaire de puissance, embarquée, comprenant notamment un générateur électrique. Ce dernier est connecté à ladite unité de distribution de courant pour l'alimentation électrique dudit convertisseur. Eventuellement ladite unité auxiliaire de puissance peut être une pile à combustible.

Selon une autre caractéristique avantageuse, ladite unité de distribution de courant comporte en outre une entrée de puissance électrique pour l'alimentation dudit convertisseur à partir d'une source externe, c'est-à-dire à partir d'un générateur de courant électrique disponible sur l'aéroport.

A partir de ces sous-ensembles, une pluralité de configurations sont offertes par ladite unité de distribution de courant pour relier ledit convertisseur électrique (comprenant essentiellement un onduleur) et certains équipements sélectionnés afin de permettre de choisir entre plusieurs possibilités pour faire démarrer un turboréacteur ou pour déplacer l'avion au sol. Ces possibilités sont notamment :
- faire démarrer un turboréacteur à l'aide de son propre démarreur par le convertisseur lui-même alimenté par une source de puissance électrique située à l'extérieur de l'avion,
- faire démarrer le même turboréacteur de la même façon mais à partir de l'unité auxiliaire de puissance embarquée. On rappelle que cette unité auxiliaire peut être constituée d'un petit moteur à turbine (susceptible par exemple d'être démarré à partir d'une source externe d'air comprimé) entraînant mécaniquement le générateur électrique précité, lui-même relié à l'entrée de l'onduleur,
- faire démarrer un autre turboréacteur à l'aide de son propre démarreur-générateur de courant, par le convertisseur recevant son énergie d'un turboréacteur déjà allumé via le démarreur-générateur de courant de ce dernier, fonctionnant en générateur.
- déplacer l'avion en alimentant le moteur du train d'atterrissage par le convertisseur recevant son énergie électrique d'un turboréacteur déjà allumé, le convertisseur recevant son énergie électrique du démarreur-générateur correspondant fonctionnant en générateur,
- déplacer l'avion en alimentant le moteur du train d'atterrissage par le convertisseur recevant son énergie de l'unité auxiliaire de puissance embarquée.

L'invention sera mieux comprise et d'autres avantages de celle-ci apparaîtront plus clairement à la lumière de la description qui va suivre d'un exemple de réalisation conforme à son principe, donnée uniquement à titre d'exemple et faite en référence aux dessins non limitatifs annexés dans lesquels :
- la figure 1 est une vue schématique générale illustrant l'architecture commune des moyens de démarrage du ou des turboréacteurs et des moyens d'alimentation du moteur de roulage associé à un train d'atterrissage pour les manoeuvres au sol ;
- la figure 2 est une vue analogue à la figure 1 illustrant une première configuration possible de l'unité de distribution de courant ;
- la figure 3 est une vue analogue à la figure 1 illustrant une deuxième configuration possible de l'unité de distribution de courant ;
- la figure 4 est une vue analogue à la figure 1 illustrant une troisième configuration possible de l'unité de distribution de courant ;
- la figure 5 est une vue analogue à la figure 1 illustrant une quatrième configuration possible de l'unité de distribution de courant ; et
- la figure 6 est une vue analogue à la figure 1 illustrant une cinquième configuration possible de l'unité de distribution de courant.

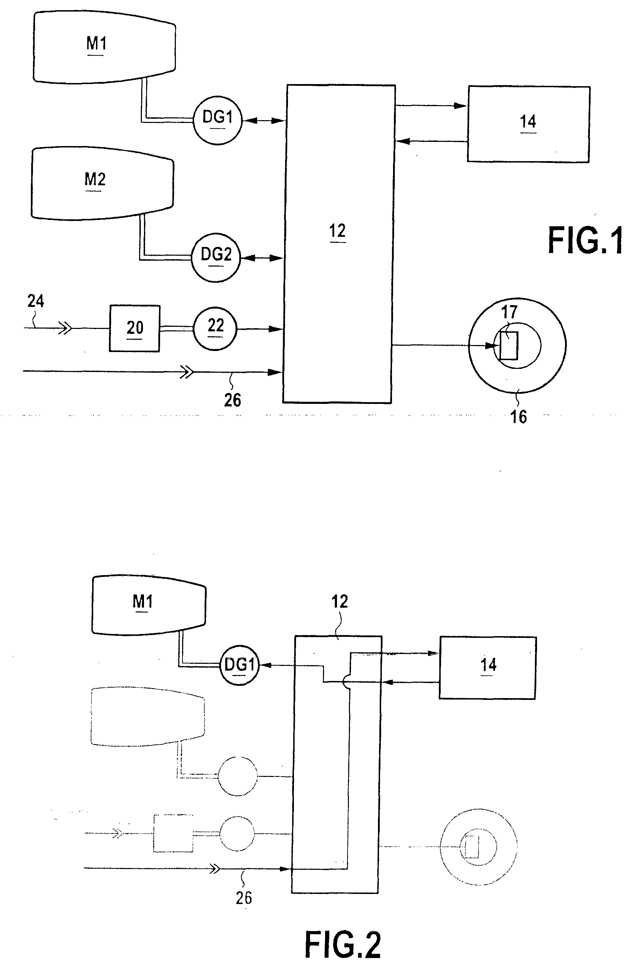

Sur la figure 1, on a représenté les équipements électriques mutualisés permettant à la fois de démarrer le ou les turboréacteurs M1, M2 et de déplacer l'avion au sol, grâce à un moteur électrique 17 intégré au train d'atterrissage 16. Outre les sous-ensembles définis ci-dessus, l'installation comporte un convertisseur électrique 14, une unité de distribution de courant 12, configurable, une unité auxiliaire de puissance embarquée 20, associée à un générateur électrique 22, également embarqué et des démarreurs-générateurs électriques DG1, DG2 respectivement associés aux turboréacteurs M1 M2. L'entrée mécanique de démarrage du turboréacteur M1 et couplée à l'arbre du démarreur-générateur électrique DG1. L'entrée mécanique de démarrage du turboréacteur M2 est couplé à l'arbre du démarreur-générateur électrique DG2. Les accès électriques des démarreurs-générateurs électriques DG1 et DG2 sont reliés à l'unité de distribution de courant 12. L'entrée et la sortie du convertisseur 14 sont reliées à l'unité de distribution de courant 12. Cette unité de distribution de courant est reliée au moteur 17 pour l'alimentation électrique de ce dernier. L'unité auxiliaire de puissance embarquée 20 est ici un petit moteur alimenté en carburant dont l'arbre de sortie entraîne le générateur électrique 22. La sortie électrique de ce générateur est reliée à l'unité de distribution de courant 12. Le démarreur de l'unité auxiliaire de puissance 20 est alimenté, selon l'exemple, par de l'air comprimé délivré par un compresseur situé au sol et connecté par une liaison pneumatique 24 à ce démarreur. Après son démarrage, cette unité 20 continue de tourner en étant alimentée par du carburant fourni par l'avion.

L'unité de distribution de courant 12 comporte aussi une entrée de puissance électrique 26 pour l'alimentation du convertisseur 14. Cette énergie électrique est fournie par un générateur situé au sol et connectée à l'entrée de puissance 26.

L'unité de distribution de courant 12 est un ensemble de contacteurs commandés, dont la conception est à la portée de l'homme du métier et dont la fonction est de connecter sélectivement, selon des configurations prédéterminées, les sous-ensembles décrits ci-dessus. Il ressort clairement de la description qui précède que le convertisseur peut recevoir de l'énergie électrique par l'intermédiaire de l'unité de distribution de courant 12, sur une entrée E, et peut simultanément fournir une énergie électrique (un courant électrique alternatif de fréquence variable) à l'unité de distribution de courant, via une sortie S. Chaque démarreur-générateur électrique DG1, DG2 peut quant à lui recevoir de l'énergie électrique via l'unité de distribution de courant et dans ce cas, il constitue le démarreur du turboréacteur qui lui est associé. Il s'agit d'une machine réversible qui peut aussi constituer un générateur de courant, distribué via l'unité de distribution de courant 12, dès lors que son arbre est entraîné par le turboréacteur M1, M2 correspondant, après le démarrage de celui-ci.

Le générateur électrique 22 est entraîné par le moteur de l'unité auxiliaire 20 et délivre donc une énergie électrique à d'autres sous-ensembles via l'unité de distribution de courant 12. Une énergie électrique appliquée à l'entrée 26 peut lui être substituée.

On va maintenant décrire les différentes façons possibles de démarrer l'un des turboréacteurs en l'occurrence ledit premier turboréacteur M1 à partir du système décrit ci-dessus.

Selon la configuration de la figure 2, l'énergie électrique est apportée par la liaison 26 reliée à un générateur électrique au sol. L'unité de distribution est configurée pour que cette énergie électrique soit appliquée à l'entrée E du convertisseur 14. La sortie S de ce convertisseur est reliée au démarreur-générateur électrique DG1 qui fonctionne ainsi en démarreur. Dans ces conditions, le démarreur DG1 entraîne l'arbre du turboréacteur M1 jusqu'à ce que celui-ci démarre et continue à fonctionner en consommant le carburant de l'avion.

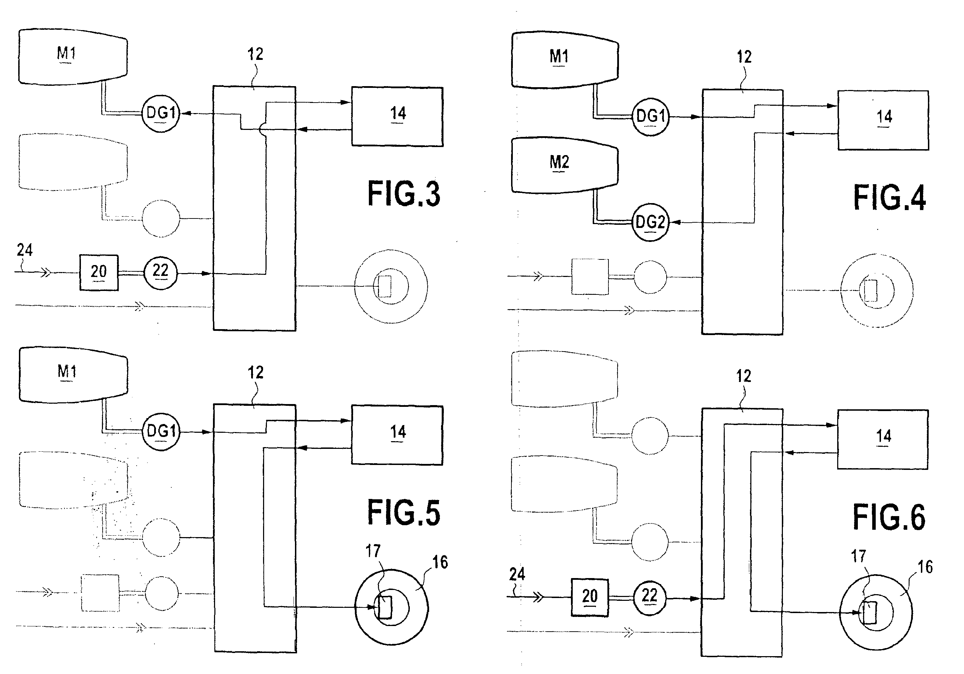

Alternativement, comme le montre la figure 3, l'unité auxiliaire de puissance 20 est mise en route par exemple par de l'air comprimé fourni à partir du sol par la liaison 24, ce qui a pour effet d'entraîner le générateur 22. L'unité de distribution 12 est configurée pour que l'énergie électrique délivrée par le générateur 22 soit appliquée à l'entrée E du convertisseur 14 et pour que la sortie S de ce même convertisseur soit appliquée à l'entrée électrique du démarreur-générateur électrique, pour que celui-ci puisse faire démarrer le turboréacteur M1.

Sur la figure 4, le turboréacteur M1 a déjà été mis en route et il entraîne donc l'arbre du démarreur-générateur électrique DG1 qui se comporte donc comme un générateur électrique et fournit par conséquent une énergie électrique à l'unité de distribution 12. Celle-ci est configurée pour que cette énergie électrique soit appliquée à l'entrée du convertisseur 14 et pour que la sortie S de ce convertisseur soit appliquée à l'entrée électrique du démarreur-générateur de courant DG2 fonctionnant en démarreur, ce qui permet le démarrage du turboréacteur M2.

Bien entendu, le même système peut être étendu à un plus grand nombre de turboréacteurs, chacun pourvu de son propre démarreur-générateur électrique.

On va maintenant décrire l'utilisation de cette installation pour l'alimentation du moteur électrique 17 permettant les déplacements de l'avion au sol.

La figure 5 montre une configuration de l'unité de distribution 12 dans laquelle le démarreur-générateur électrique entraîné par le turboréacteur M1, fournit de l'énergie électrique qui est appliquée à l'entrée E du convertisseur 14. La sortie S du convertisseur 14 est reliée, via l'unité de distribution 12, au moteur 17.

Au contraire, dans la configuration de la figure 6, c'est l'unité auxiliaire de puissance embarquée 20 qui, par l'intermédiaire du générateur électrique 22 applique l'énergie électrique à l'entrée E du convertisseur 14, via l'unité de distribution 12. Cette dernière connecte également la sortie S du convertisseur 14 au moteur électrique 17.

Le système qui vient d'être décrit et ses différentes configurations est particulièrement avantageux du fait que les fonctions de démarrage du turboréacteur et d'entraînement électrique pour le roulage au sol ont de nombreux points communs. On peut citer notamment :
- un très fort couple à l'arrêt dû à l'inertie et au frottement du turboréacteur comme des roues du train d'atterrissage,
- une utilisation limitée dans le temps (quelques minutes),
- une utilisation essentiellement au sol (le redémarrage en vol nécessitant une puissance moitié moindre),
- une fréquence électrique de l'onduleur relativement faible à la puissance demandée dans l'une comme dans l'autre fonction.

La mutualisation de ces fonctions de démarrage et de roulage au sol permet donc d'optimiser le convertisseur de puissance, notamment pour ce qui concerne son refroidissement. Il n'est plus nécessaire de réaliser le refroidissement de ces équipements par voie de circulation de fluide et on peut au contraire envisager un refroidissement par air, éventuellement par convection naturelle. Ce mode de refroidissement par air est d'autant plus indiqué lorsque les moteurs sont sous les ailes et dans des conditions d'environnement comparables à celles du train d'atterrissage. Le filtrage électromagnétique est également plus simple.

## Revendications

1. Aéronef comportant un premier turboréacteur (M1) équipé d'un premier démarreur-générateur électrique (DG1), un train d'atterrissage (16) équipé d'un moteur électrique (17) de manoeuvre au sol, et un convertisseur électrique (14) apte à être couplé audit démarreur-générateur ou audit moteur électrique de manoeuvre via une unité de distribution de courant (12) configurable, **caractérisé en ce que** ladite unité de distribution de courant (12) comporte en outre une entrée de puissance électrique (26) pour l'alimentation externe dudit convertisseur.

2. Aéronef selon la revendication 1, **caractérisé en ce qu'**il comporte en outre une unité auxiliaire de puissance (20), embarquée, équipée d'un générateur électrique (22), **caractérisé en ce que** ce générateur électrique est connecté à ladite unité de distribution de courant (12) pour l'alimentation électrique dudit convertisseur (14).

3. Aéronef selon la revendication 1 ou 2, **caractérisé en ce que** ladite unité de distribution de courant (12) comporte une configuration reliant ladite entrée de puissance électrique (26) à l'entrée dudit convertisseur et la sortie de ce convertisseur audit premier démarreur-générateur (DG1) fonctionnant en démarreur.

4. Aéronef selon la revendication 2, **caractérisé en ce que** ladite unité de distribution de courant (12) comporte une configuration reliant la sortie dudit générateur électrique à l'entrée dudit convertisseur et la sortie de ce convertisseur (14) audit premier démarreur-générateur (DG1) électrique fonctionnant en démarreur.

5. Aéronef selon l'une des revendications précédentes, **caractérisé en ce que** ladite unité de distribution de courant comporte une configuration reliant ledit premier démarreur-générateur (DG1) fonctionnant en générateur à l'entrée dudit convertisseur et la sortie de ce convertisseur audit moteur électrique (17) de manoeuvre du train d'atterrissage.

6. Aéronef selon la revendication 2 et l'une des revendications 2 à 5, **caractérisé en ce que** ladite unité de distribution de courant (12) comporte une configuration reliant ledit générateur électrique (22) à l'entrée dudit convertisseur et la sortie de ce convertisseur audit moteur électrique (17) de manoeuvre du train d'atterrissage.

7. Aéronef selon l'une des revendications précédentes, **caractérisé en ce qu'**il comporte au moins un second turboréacteur (M2) équipé d'un second démarreur-générateur électrique (DG2) et **en ce que** ladite unité de distribution de courant comporte une configuration reliant ledit premier démarreur-générateur (DG1) fonctionnant en générateur à l'entrée dudit convertisseur et la sortie de ce convertisseur (14) audit second démarreur-générateur (DG2) fonctionnant en démarreur.

## Patentansprüche

1. Flugzeug, umfassend ein erstes Turbostrahltriebwerk (M1), das mit einem ersten elektrischen Starter/Generator (DG1) ausgestattet ist, ein Fahrwerk (16), das mit einem Elektromotor (17) zum Betätigen am Boden ausgestattet ist, sowie einen elektrischen Wandler (14), der geeignet ist, über eine konfigurierbare Stromverteilungseinheit (12) mit dem Starter/Generator oder mit dem elektrischen Betätigungsmotor gekoppelt zu werden, **dadurch gekennzeichnet, dass** die Stromverteilungseinheit (12) ferner einen elektrischen Leistungseingang (26) für die externe Versorgung des Wandlers umfasst.

2. Flugzeug nach Anspruch 1, **dadurch gekennzeichnet, dass** es ferner eine an Bord befindliche Hilfsleistungseinheit (20), die mit einem elektrischen Generator (22) ausgestattet ist, umfasst, **dadurch gekennzeichnet, dass** dieser elektrische Generator für die elektrische Versorgung des Wandlers (14) mit der Stromverteilungseinheit (12) verbunden ist.

3. Flugzeug nach Anspruch 1 oder 2, **dadurch gekennzeichnet, dass** die Stromverteilungseinheit (12) eine Konfiguration aufweist, die den elektrischen Leistungseingang (26) mit dem Eingang des Wandlers und den Ausgang dieses Wandlers mit dem als Starter arbeitenden ersten Starter/Generator (DG1) verbindet.

4. Flugzeug nach Anspruch 2, **dadurch gekennzeichnet, dass** die Stromverteilungseinheit (12) eine Konfiguration aufweist, die den Ausgang des elektrischen Generators mit dem Eingang des Wandlers und den Ausgang dieses Wandlers (14) mit dem als Starter arbeitenden ersten elektrischen Starter/Generator (DG1) verbindet.

5. Flugzeug nach einem der vorhergehenden Ansprüche, **dadurch gekennzeichnet, dass** die Stromverteilungseinheit eine Konfiguration aufweist, die den als Generator arbeitenden ersten Starter/Generator (DG1) mit dem Eingang des Wandlers und den Ausgang dieses Wandlers mit dem Elektromotor (17) zum Betätigen des Fahrwerks verbindet.

6. Flugzeug nach Anspruch 2 und einem der Ansprüche 2 bis 5, **dadurch gekennzeichnet, dass** die Stromverteilungseinheit (12) eine Konfiguration aufweist, die den elektrischen Generator (22) mit dem Eingang des Wandlers und den Ausgang dieses Wandlers mit dem Elektromotor (17) zum Betätigen des Fahrwerks verbindet.

7. Flugzeug nach einem der vorhergehenden Ansprüche, **dadurch gekennzeichnet, dass** es wenigstens ein zweites Turbostrahltriebwerk (M2), das mit einem zweiten elektrischen Starter/Generator (DG2) ausgestattet ist, umfasst und dass die Stromverteilungseinheit eine Konfiguration aufweist, die den als Generator arbeitenden ersten Starter/Generator (DG1) mit dem Eingang des Wandlers und den Ausgang dieses Wandlers (14) mit dem als Starter arbeitenden zweiten Starter/Generator (DG2) verbindet.

## Claims

1. An aircraft having a first turbojet (M1) fitted with a first electric starter-generator (DG1), an undercarriage (16) fitted with an electric motor (17) for taxiing on the ground, and an electricity converter (14) suitable for being coupled to said starter-generator or to said taxiing electric motor via a configurable electricity distribution unit (12), **characterized in that** said electricity distribution unit (12) further includes an electric power inlet (26) for externally powering said converter.

2. An aircraft according to claim 1, **characterized in that** it further includes an auxiliary on-board power unit (20) fitted with an electricity generator (22), and **characterized in that** the electricity generator is connected to said electricity distribution unit (12) to power said converter (14) electrically.

3. An aircraft according to claim 1 or 2, **characterized in that** said electricity distribution unit (12) includes a configuration connecting said electrical power inlet (26) to the inlet of said converter and the outlet of the converter to said first starter-generator (DG1) operating as a starter.

4. An aircraft according to claim 2, **characterized in that** said electricity distribution unit (12) includes a configuration connecting the outlet of said electricity generator to the inlet of said converter, and the outlet of the converter (14) to said first electric starter-generator (DG1) operating as a starter.

5. An aircraft according to any preceding claim, **characterized in that** the electricity distribution unit includes a configuration connecting said first starter-generator (DG1) operating as a generator to the inlet of said converter, and the outlet of the converter to said taxiing electric motor (17) of the undercarriage.

6. An aircraft according to claim 2 and any one of claims 2 to 5, **characterized in that** said electricity distribution unit (12) includes a configuration connecting said electricity generator (22) to the inlet of said converter, and the outlet of the converter to said taxiing electric motor (17) of the undercarriage.

7. An aircraft according to any preceding claim, **characterized in that** it includes at least one second turbojet (M2) fitted with a second electric starter-generator (DG2), and **in that** said electricity distribution unit includes a configuration connecting said first starter-generator (DG1) operating as a generator to the inlet of said converter, and the outlet of the converter (14) to said second starter-generator (DG2) acting as a starter.
